# EUROPEAN PATENT APPLICATION

(11) **EP 4 289 788 A1**
(43) Date of publication of application: **13.12.2023**
(21) Application number: 22177443.3
(22) Date of filing: 07.06.2022
(51) Int. Cl.: C01G 23/00, C01G 45/00, C01G 45/12, H01M 4/1315, H01M 4/13915, H01M 4/36, H01M 4/505

(54) **PROCESS FOR MAKING TRANSITION METAL OXYFLUORIDES AS ELECTRODE MATERIALS FOR ALKALI METAL ION CELLS**

(71) Applicant: Karlsruher Institut für Technologie, 76131 Karlsruhe (DE)
(72) Inventor: El Kharbachi, Abdelouahab, 89537 Giengen an der Brenz (DE); Fichtner, Maximilian, 89073 Ulm (DE); Shirazi Moghadam, Yasaman, 89081 Ulm (DE)

(57) **Abstract**

The present invention refers to a process for making a transition metal oxyfluorides, as battery grade electrode materials, comprising the following steps:
(a) providing an alkali metal compound and at least one transition metal compound as precursors
(b) mixing the precursors
(c) adding an alkali metal fluoride
(d) carrying out a first heat treatment
(e) cooling down to room temperature.

## Description

The present invention concerns a process for making transition metal oxyfluorides as electrode materials for alkali metal ion cells as well as a procedure for bulk and surface stabilization of metastable disordered rocksalt oxyfluorides as efficient electrode materials for alkali metal ion cells.

### State of the art

Today's demand for lithium ion batteries have proved that cobalt and nickel need to be replaced with alternative transition metals (TMs). Novel disordered rocksalt (DRS) oxyfluorides can meet this goal, since they can be synthesized with a multitude of TMs and their combinations. A typical DRS material, with a cubic close packed structure, can allow the creation of percolation pathways within the material to support fast ionic diffusion beneficial for (de)charging the batteries. Moreover, the cation disorder contributes to the enhancement of the structural and thermodynamic stability of Li-rich cathode materials with better kinetics. Up to now, several lithium excess phases such as Li₃V₂O₅, Li₂VO₃ or Li₃NbO₄ have shown high capacities around 300 mAh·g⁻¹ as cathode materials. However, vanadium is a toxic and expensive element, which may be a hindrance for large scale application. In addition, cathode materials based on manganese have the potential to attract attention due to their low cost, ease of synthesis, great stability, and environmental friendliness. A widely used strategy is the substitution of oxygen with fluorine, which can stabilize the structure and enhance the electrochemical properties. In a DRS configuration, the fluorination allows to work with lower oxidation state of the TM for instance Mn, and makes the Li-O bond weaker. It can also induce Mn³⁺ and oxygen vacancies, which would reduce the energy barrier of Li⁺ in the crystal structure and improve the electronic transmission performance. Despite the structural advances for these materials, however, all these compositions suffer from short life span already after 25 cycles. Shirazi Moghadam et al. has combined in Toward Better Stability and Reversibility of the Mn4+/Mn2+ Double Redox Activity in Disordered Rocksalt Oxyfluoride Cathode Materials, Chem. Mater. 2021, 33, 8235-8247 the strategy of using high-valent cations with partial substitution of oxygen by fluorine anions in disordered rocksalt-structure phase to achieve optimal Mn⁴⁺/Mn²⁺ double-redox reaction in the composition system Li₁₊ₓMn_{2/3}Ti_{1/3}O₂Fₓ (0 ≤ x ≤ 2/3). However after observation of their initial electrochemical properties, the synthesized materials are not stable. Indeed, these DRS materials resulting from ball-milling synthesis exhibit a metastability, owing to the presence of microstrain and significant surface defect domains comparable to the size of the nanocrystalline bulk material.

To overcome these structural anomalies is a real challenge since the discovery of this class of materials in 2015. Since more than 5 years, several research groups tried to stabilize the structure of these materials and control their behavior in battery cells, which turned out unsuccessful so far.

### Aim of the invention

The objective of the present invention is to overcome the limitations and disadvantages of the prior art.

In particular it is an aim of the present invention to stabilize disordered rocksalt transition metal oxyfluorides and to enable their use as cathode materials in electrochemical alkali metal ion cells. Although the thermodynamic stability is important, the transition metal oxyfluorides should further demonstrate a long-term electrochemical stability under high-voltage and in the presence of dissociating media.

### Solution

This objective is solved with regard to a process for making a transition metal oxyfluoride by the features of claim 1, with regard to a transition metal oxyfluoride by the features of claim 10 and with regard to an electrode material by the features of claim 11. Furthermore, it is solved with regard to an alkali metal ion cell by features of claim 12, with regard to a process for making an electrode by features of claim 13 and with regard to a process for using an alkali metal ion cell by features of claim 14. The subclaims each describe advantageous embodiments of the invention.

The invention refers to a process for making a transition metal oxyfluoride comprising the following steps:
(a) providing an alkali metal compound and at least one transition metal compound as precursors
(b) mixing the precursors
(c) adding an alkali metal fluoride
(d) carrying out a first heat treatment
(e) cooling down to room temperature

"Alkali metal" means in the present invention lithium or sodium. Lithium is preferred.

In a particular embodiment the alkali metal compound and/or the transition metal compound is an oxide, an acetate or a carbonate. Preferably the alkali metal compound is lithium or sodium oxide and the transition metal compound is a transition metal oxide. In a preferred embodiment the alkali metal fluoride is LiF or NaF, preferably LiF.

In a particular embodiment the powder obtained after step (c) is cold-pressed, preferably with a pressure in the range of between 100 MPa and 300 MPa, more preferably at 240 MPa before carrying out step (d). Cold pressing allows to protect the powders, and induces faster crystallite growth for better structural stabilization. The thus obtained powder-pellets are then heat treated.

In a preferred embodiment the steps (d) and (e) are repeated at least once, leading to at least a second heat treatment, preferably twice, leading to a third heat treatment.

The temperature of the first heat treatment is in particular in the range of between 150°C and 400°C preferably between 200°C and 300°C more preferably between 270°C and 290°C especially 280°C. The upper temperature limit is defined by the phase transformation to spinel-like structure occurring at high temperature, which will depend on the composition of the transition metal oxyfluoride. The temperature chosen is in particular up to 10°C lower than the temperature of phase transformation. The thermal stability is currently determined using differential scanning calorimetry (DSC). The advantage of this process step is to use a low temperature sintering in contrast to spinel-like oxyfluorides, which need hightemperature sintering and which have different insertion mechanism and alkali metal diffusion.

Futhermore, the temperature of the at least second heat treatment and of the subsequent heat treatment is in the range of between 150°C and 400°C.

In a particular embodiment the temperature of the first heat treatment, of the second heat treatment and of the subsequent heat treatments are equal.

In a particular embodiment the duration of the first heat treatment is in the range of between 1 hour and 10 hours, preferably between 3 hours and 8 hours, more preferably between 4 hours and 6 hours especially 5 hours. In a preferred embodiment the duration of the second heat treatment and of the subsequemt heat treatments is in the range of between 1 hour and 10 hours preferably between 3 hours and 8 hours more preferably between 4 hours and 6 hours especially 5 hours.

In a particular embodiment the duration of the first heat treatment, of the second heat treatment and of the subsequent heat treatments are equal.

In a particular embodiment the process comprises the following steps: (1) synthesis by pre-drying, mixing and milling the precursors for 20h, and then by adding a lithium or sodium fluoride especially LiF under the same conditions under argon atmosphere (2) cold-pressing of the powders at 240 MPa (3) carrying out first heat treatment (Temperature T1, time t1), cooling down to room temperature, and then the second heat treatment (T2, t2), followed by a third heat treatment (T3, t3). All the heating/cooling steps are done under reducing gas flow (150°C < T1,T2,T3 < 400°C). Afterwards, the sintered powders, with mitigated defects and strains, are ground and passed through a sieve (200 mesh) to obtain fine TM oxyfluoride powders (< 0.5 micron), consisting of disordered rocksalt structure of increased symmetry.

Previous works deal with the optimisation of the synthesis of the materials. No records for low temperature stabilisation of oxyfluorides can be found below their temperature of decomposition. Only few reports exist for ceramic synthesis at high temperature beyond the thermal stability of the compounds. The technical features reside in the combination of a low temperature heat treatment process under reducing atmosphere and further cathodes conditioning in a Li-ion cells.

The at least one transition metal is preferably chosen from the group consisting of {Sc, Ti, V, Cr, Mn, Fe, Co, Ni, Cu, Zn, Nb and Mo} more preferably {Ti, Mn}.

In a particular embodiment two transition metal compounds are provided during step (a). Thus obtained mixed transition metal oxyfluorides show higher stability of the crystal structure during electrochemical cycling. This occurs in particular by adding Ti or Nb. In a particular embodiment with Ti and Mn as transition metals used, Ti keeps Mn in lower oxidation state thus providing double redox reaction.

In a preferred embodiment step (b) and/or step (c) is performed under inert gas atmosphere preferably argon.

In a preferred embodiment step (d) and/or step (e) is performed under reducing gas flow preferably H₂ gas or a gas mixture H₂/Ar.

In a further embodiment the obtained transition metal oxyfluoride is sieved and/or mixed preferably milled more preferably via high energy ball-milling.

In a preferred embodiment the precursors are pre-dried and/or milled before the step (b).

The present invention relates to a transition metal oxyfluoride obtained by the above mentioned process. The transition metal oxyfluorides are structurally homogenous and have the structure of disordered rock crystals. Disordered rock crystals have a cubic crystalline structure with lacking ions in commonly occupied sites. Those sites can be filled by alkali metal ions. The size of the transition metal oxyfluoride particles are in the range of between 100 µm and 500 µm preferably between 150 µm and 450 µm more preferably between 200 µm and 400 µm.

The main features of the present transition metal oxyfluorides are mitigated structural and surface defects, elevated atomic homogeneity and increased crystallite size. Their advantage is in particular to be beneficial for relieving the Mn-dissolution degradation process of the oxyfluoride cathode materials during lithium ion battery operation.

In a preferred embodiment the oxyfluoride comprises two transition metals preferably Mn and Ti.

In a preferred embodiment the oxyfluoride has the formula Li₁₊ₓMn_{2/3}Ti_{1/3}O₂Fₓ or Na₁₊ₓMn_{1/2}Ti_{1/2}O₂Fₓ with 0 ≤ x ≤ 2/3 and a disordered rocksalt structure of the space group *Fm-3m.*

The present invention relates also to a cathode comprising a transition metal oxyfluoride as active cathode material preferably a conductive additive, a binder and a current collector.

Furthermore, an alkali metal ion cell is claimed comprising a cathode comprising a transition metal oxyfluoride as active cathode material and preferably an electrolyte, a separator and a counter electrode.

A further aspect of the present invention is a process for making an electrode, preferably a cathode comprising at least a transition metal oxyfluoride and comprising following steps:
a) providing the transition metal oxyfluoride as active electrode material and a conductive additive
b) adding a mixture of a binder and a solvent to obtain a slurry
c) coating the obtained slurry on a current collector

Another aspect of the present invention is a process for making a alkali metal ion cell comprising following steps:
a) assembling the cell
b) conditioning the cell between 1 day and 14 days preferably between 1 day and 7 days, more preferably between 2 days and 5 days especially 3 days
c) electrochemical cycling.

A remarkable surface stability and long-term cycling stability of the electrodes was reached through an additional conditioning step of the Li-ion half-cells for 3 days, combined with a voltage cut-off, which had improved further the electrochemical performance of the cells and could guaranty a notable capacity retention over 200 cycles, without any additive incorporation process. The conditioning corresponds to a self aging of the electrode in contact with the electrolyte.

The cell is preferably cycled in the voltage window between 1 V and 4.8 V, preferably between 1.3 V and 4.5 V especially between 1.5 V and 4.0 V.

The process of the present invention allows the mitigation of structural and surface defects, elevates the atomic homogeneity and increase of crystallite size of air-sensitive disordered rocksalt (DRS) oxyfluoride materials avoiding the degradation process of the oxyfluoride cathode materials. This allows fast charging of the alkali lithium ion batteries, procedure for structural/surface stabilization and methods for use thereof.

The process of the present invention is solvent-free and uses a low-temperature sintering.

The results point clearly to a means of guided stabilization procedure of DRS materials for sustainable alkali metal-ion batteries.

The process has induced a clear impact for practical utilization, an evidence for structural/surface improvements in relation with mitigation of defects, strain free particles, and reduced surface deficient domains. The sintering process has a strong influence on the particle/crystallite size of the active materials.

The procedure has the advantages of simple processing, and reactivity and electrochemical processes can be significantly controlled according to the particle/crystallite size. The final electrode materials show higher battery performance and repeatedly stable capacity retention over 200 cycles (80%), where the reported patent-data provide a capacity fading of at least 25% already in the 20th cycle. The materials can be synthesized in large amounts for industrial scale-up and mass production.

### Working examples

The present invention will be illustrated in more detail below by means of working examples and figures. Therefore
Fig. **1** (a)-(b) shows high temperature in-situ XRD measurements of a transition metal oxyfluoride according to the invention from 200-560°C; (c) DSC analysis from room temperature to 400°C under argon flow (50 ml/min).

**Fig. 2** shows the comparison of the XRD patterns of oxyfluorides according to the present invention before and after heat treatment (HT).

**Fig. 3** shows the comparison of the crystallite size **(a)** and particle size **(b)** of oxyfluorides according to the present invention before (left sphere) and after (right sphere) heat treatment. The slope of the rectangles indicates the extent of the size change.

**Fig. 4** shows the galvanostatic charge and discharge profile of two oxyfluorides according to the present invention before and after heat treatment at the rate of 0.1C and within a voltage window of 1.5-4.3V.

**Fig. 5 (a)****-(b)** shows the cyclability profile of 2 oxyfluorides according to the present invention before and after heat treatment with respect to number of cycles up to 100 cycles, and (c) the comparison of the cyclability (discharge) of both oxyfluorides after heat treatment up to 200 cycles.

**Fig. 6** shows the capacity retention of an oxyfluoride according to the present invention at different cut-off voltages.

**Fig. 7** shows the comparison of the gained discharge capacities of the conditioned electrochemical cells according to the present invention.

### Synthesis of a DRS transition metal oxyfluoride according to the present invention

The process used the following materials as precursors:
Li2O (Alfa Aesar, 99.7 %) or Na2O (Alfa Aesar, 80 %)
Mn2O3 (Alfa Aesar, 99%)
Ti2O3 (Alfa Aesar, 99.8%)
LiF (Alfa Aesar, 99.9%) or NaF (Alfa Aesar, 99.99%)

The precursors were ball milled together in two steps with the aim to produce 3 g of the final product. First a lithium metal oxide and the transition metal oxides (Li₂O, Mn₂O₃, Ti₂O₃) were mixed together for 20 hours at a rate of 600 rpm under inert atmosphere during which Li₂MnₓTi₁₋ₓO₂ is formed. In the second step, LiF was added, and the mixture was ball milled for more 20 hours at the same speed to form the phases Li₁₊ₓMn_{2/3}Ti_{1/3}O₂Fₓ (0 ≤ x ≤ 2/3). According to the F/(O+F)anions ratio, the synthesized oxyfluorides are referred as LMO, LMOF11, LMOF20, LMOF33, for 0%, 11%, 20% and 33% of F, respectively:
LiMn_{2/3}Ti_{1/3}O₂ (LMO) as a reference
Li_{1.25}Mn_{2/3}Ti_{1/3}O₂F_{0.25} (LMOF11)
Li_{1.5}Mn_{2/3}Ti_{1/3}O₂F_{0.5} (LMOF20)
Li₂Mn_{2/3}T1_{1/3}O₂F (LMOF33)

The DRS materials consisting of 500 mg of the material were pressed at 240 MPa using 10 mm die-set. The resulted pellets were put in a stainless steel cells. The cells were introduced in an alumina crucible inside a quartz tube with the length of 43 cm. The tube was put in a tubular oven under forming gas flow (∼ 50 ml/min), and heated with the rate of 80 °C/h up to 280 °C for five hours, then the tube was self-cooled down to room temperature. This procedure was repeated two more times, resulting in a total heating time of 15 hours.

After heat treatment the pellets were ground to fine particles. Phase identification was conducted using transmission geometry using STOE STADI-p diffractometer in Mo K_{α} radiation (λ=0.70932 Å), in 2θ range of 10-60 degrees and step size of 0.02°. Rietveld refinement was completed using Full Prof-Suite software.

The XRD patterns of the oxyfluorides before and after heat treatment indicate that all Li₁₊ₓMn_{2/3}Ti_{1/3}O₂Fₓ with 0 ≤ x ≤ 2/3 compounds have a disordered rocksalt structure of the space group Fm-3m. XRD refinements on the patterns have been performed with the target compositions of LMOF11, LMOF20 and LMOF33. The lattice parameters were found to be 4.208, 4.206 and 4.179 Å before heat treatment and 4.180, 4.182 and 4.151 Å after heat treatment for LMOF11, LMOF20 and LMOF33 oxyfluorides, respectively.

### Synthesis of an electrode according to the present invention

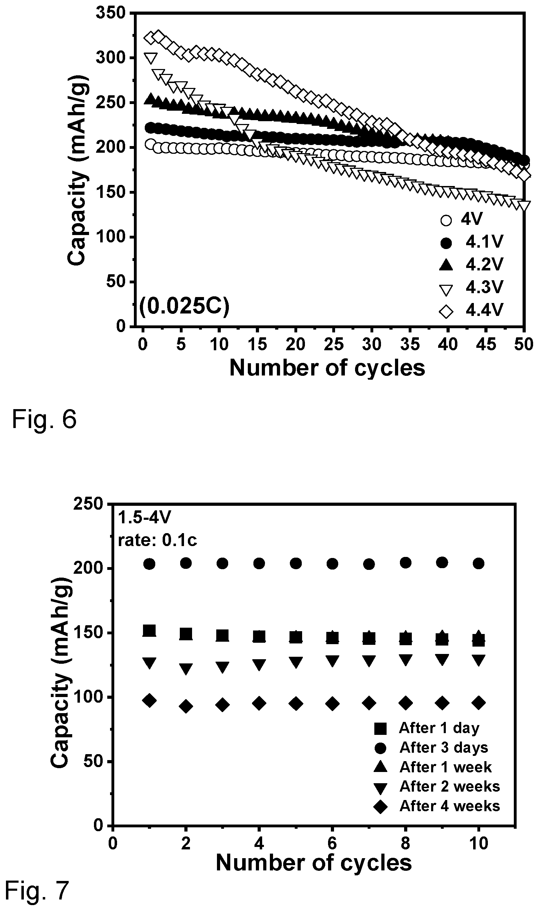

Electrodes with heat treated oxyfluorides have been prepared and conditioned at different times in the Li-ion half-cells, meaning for 1 day, 3 days, 1 week, 2 weeks and 4 weeks. This strategy will allow to find the appropriate thickness of the formed passivation layer, and hence reduce any surface related issues in contact with the electrolyte. The cells were then cycled in the voltage window 1.5-4V. The results lead to the finding that the batteries which have been conditioned for 3 days showed the highest capacities as it is shown in **Fig. 7****.** It comes out that the 3 days conditioning, along with working with voltage limitation at 4V, is an additional asset for long-term cycling stability of heat treated oxyfluorides.

To prepare a cathode film from Li₁₊ₓMn_{2/3}Ti_{1/3}O₂Fₓ with 0 ≤ x ≤ 2/3, the powder of the active compounds and carbon black (Timcal, SUPER C65) were mixed together for three hours in Ar-filled 20 ml silicon nitride vial containing 10 balls (Ø 2 mm) of the same material. The grinding medium was carried out at low rate of 200 rpm, using Fritsch P7 planetary ball mill. The composite was then sieved using 200 mesh sieve. For making slurry first the polyvinylidene fluoride (PVDF) as a binder was mixed with N-methyl-2-pyrrolidone (NMP) as solvent for 5 minutes. Then the mixture of active material and carbon black was added in two steps each step mixing for 5 minutes, in total the mixing time was 15 minutes. For slurry making process 4 cm capsules were used with 5 small balls as grinding agent compatible with Thinky mixer (ARE-250, Thinky Inc.). The slurry was then coated on an aluminum foil with an automatic doctor blade machine in an argon filled glove box. The composite coating was dried at 120°C overnight in vacuum oven. Each working electrode contained approximately 2 mg of active material. To assemble a cell for all cycling tests, Swagelok cells were fabricated in an argon filled glove box. 140 µL of 1 M of LiPF₆ in ethylene carbonate and ethyl methyl carbonate (EC/DEC) solution (1:1, BASF^{®}), lithium foil and two Whatman^{®} glass fiber was used as electrolyte, counter electrode and a separator, respectively. The assembled swaglock cells were tested at 25 °C in climate chambers using Arbin BT2000 electrochemical workstation. The specific capacity of the cells was calculated on the amount of active compounds (60 wt %) in the cathode film.

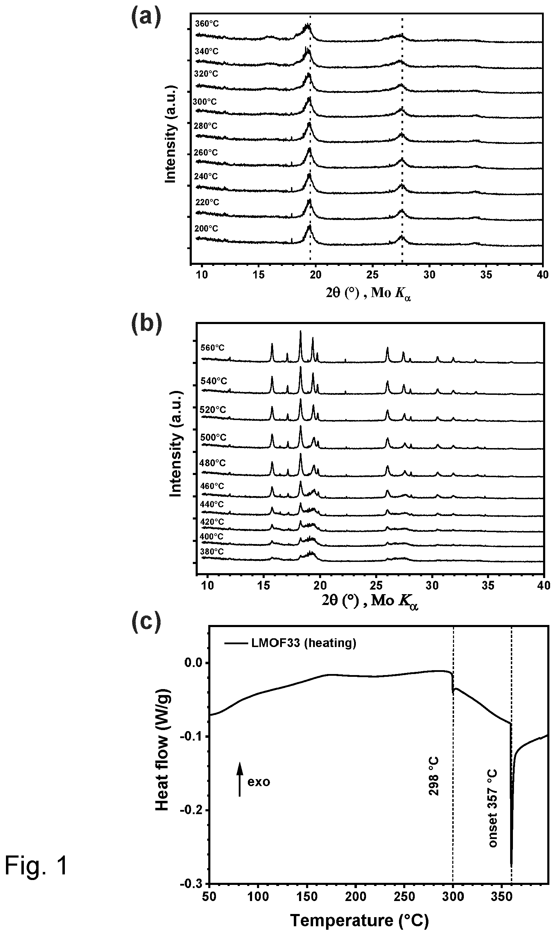

**Fig. 1** shows the high temperature XRD measurements from 200-560 °C of the LMOF33 oxyfluoride indicating that the structure is stable until 280-300 °C (in agreement with DSC thermal analysis in **Fig. 1c****)** and after that some changes start to appear in the XRD pattern of the oxyfluoride until complete decomposition of the oxyfluoride at 520°C.

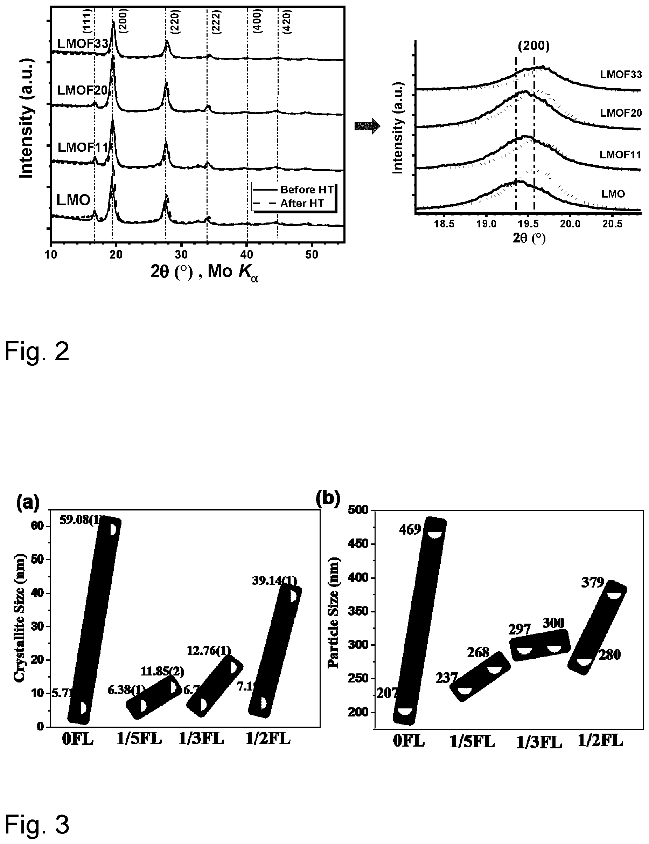

**Fig. 2** shows the XRD patterns of the synthesized samples before and after heat treatment. All Li₁₊ₓMn_{2/3}Ti_{1/3}O₂Fₓ 0 ≤ x ≤ 2/3 compounds have a disordered rocksalt structure of the space group *Fm-3m.* XRD refinements on the patterns have been performed with the target compositions of LMOF11, LMOF20 and LMOF33. The lattice parameters were found to be 4.208, 4.206 and 4.179 Å before heat treatment and 4.180, 4.182 and 4.151 Å after heat treatment of LMOF11, LMOF20 and LMOF33 oxyfluorides, respectively.

The XRD measurements recorded for longer times before and after heat treatment show the presence of the disordered rocksalt phase, with no obvious additional extra peaks of impurity. However, after heat treatment all the patterns showed sharper peaks, with slight shift to higher angles in comparison with non-treated powders. This corresponds to lattice shrinking of the DRS structure owing to the increase of symmetry, leading to a better thermodynamic stability

The structural details before and after treatment can be found in **Fig. 3****.** As mentioned above, all the four compositions have smaller lattice parameter after heat treatment and bigger crystallite size, calculated by Williamson-Hall method. It should be noted that the BET measured for LMOF33 oxyfluoride revealed that the heat treatment resulted in reduced specific surface area from 5 to 4.5 m²/g. This reduction should end with a better stability of the heat treated oxyfluoride, since it will diminish the possible reactions of the active material with the electrolyte. At the same time due to small active surface area, the areal capacity of the heat treated oxyfluoride should be smaller.

The change in morphology of the LMOF33 oxyfluoride and increase of particle size after heat treatment are visible in the SEM (Scanning Electron Microscope). The STEM-EDX images of the LMOF33 oxyfluoride show that the fluorine is well incorporated in the nanostructure, and all the elements have a homogenous distribution in the oxyfluoride.

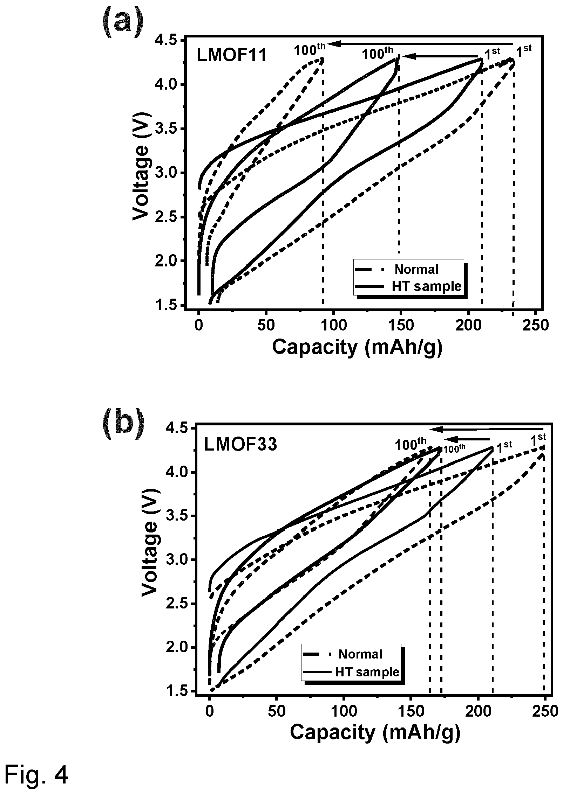

**Fig. 4** shows the galvanostatic charge and discharge profiles up to 100 cycles at the rate of 0.1C and within the voltage profile of 1.5-4.3V of the oxyfluorides before and after heat treatment. It is clear that although the initial capacity of the oxyfluorides after heat treatment is lower, the trend of losing the capacity is much slower. These profiles for both compositions show that the treatment was successful to increase the performance of all the compounds, specifically for the LMOF oxyfluoride, where the capacity loss after 100 cycles is 39% before heat treatment and 8% after heat treatment process.

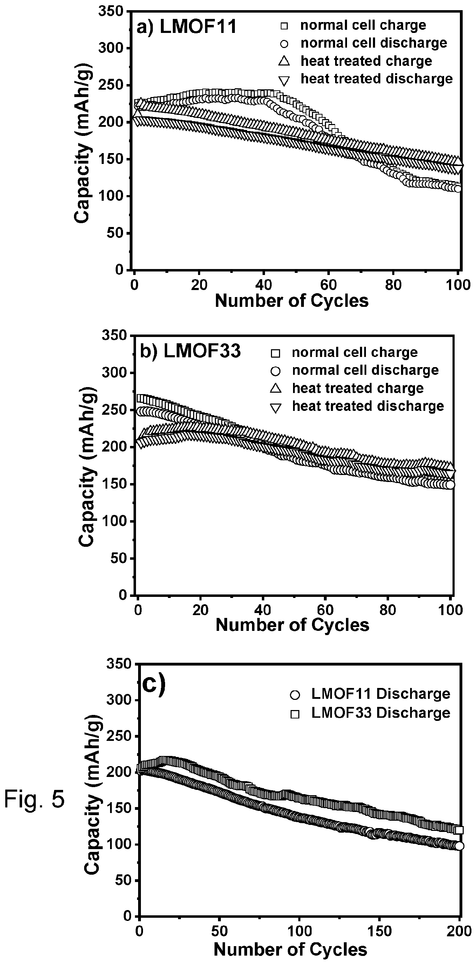

The comparison of the results up to 100 cycles can be more visible in **Fig. 5****,** which shows the cyclability of the oxyfluorides with respect to number of cycles. It can be seen that the degradation mechanism of the oxyfluorides has been slowed down, which can be due to structural and morphology changes of the oxyfluorides.

**Fig. 5c** shows the cyclability of the heat treated oxyfluorides up to 200 cycles in charge and discharge states. The sole effect of heat treatment is clear, and the LMOF33 oxyfluoride after heat treatment showed a promising discharge capacity of 140 mAh.g⁻¹.

In order to find the proper voltage cut off for these materials, the LMOF33 sample was cycled at slow rate of 0.025C up to 50 cycles at different cut-off voltages from 4 to 4.4 V **(****Fig. 6****).** The sample charged to 4 V, although it had lower initial capacity, showed the best capacity retention. All the samples were cycled from 1.5 V to the certain voltage. It was found that the cells charged at higher voltages (>4.3 V) demonstrated a drastic capacity fading. We decided to limit the voltage to 4 V and focus on further effect of electrode conditioning in contact with the electrolyte.

**Fig. 7** shows the galvanostatic charge and discharge profiles of the oxyfluorides at the rate of 0.1C. Electrodes with heat treated oxyfluorides have been prepared and aged at different times in the Li-ion half-cells, meaning for 1 day, 3 days, 1 week, 2 weeks and 4 weeks. This strategy will allow to find the appropriate thickness of the formed passivation layer, and hence reduce any surface related issues in contact with the electrolyte. The cells were then cycled in the voltage window 1.5-4V. The results lead to the finding that the batteries which have been aged for 3 days showed the highest capacities as it is shown in **Fig.7****.** It comes out that the 3 days conditioning, along with working with lower voltage windows, is an additional asset for long-term cycling stability of heat treated oxyfluorides.

As a result, we cycled the cells made of LMOF33 oxyfluoride aged for three days, before and after heat treatment in the voltage window of 1.5-4 V, and we found out the very special stability of the heat treated oxyfluoride after 200 cycles (140 mAh.g⁻¹), with only 20% loss of the initial capacity.

## Claims

1. Process for making a transition metal oxyfluoride comprising the following steps:
(a) providing an alkali metal compound and at least one transition metal compound as precursors
(b) mixing the precursors
(c) adding an alkali metal fluoride
(d) carrying out a first heat treatment
(e) cooling down to room temperature.

2. Process for making a transition metal oxyfluoride according to claim 1, wherein the steps (d) and (e) are repeated at least once, leading to at least a second heat treatment.

3. Process for making a transition metal oxyfluoride according to claim 1 or 2, wherein the steps (d) and (e) are repeated twice.

4. Process for making a transition metal oxyfluoride according to one of the claims 1 to 3, wherein the temperature of the first heat treatment and/or the subsequent heat treatment is in the range of between 150°C and 400°C preferably between 200°C and 300°C more preferably between 270°C and 290°C especially 280°C.

5. Process for making a transition metal oxyfluoride according to one of the claims 1 to 4, wherein the duration of the first heat treatment is in the range of between 1 hour and 10 hours preferably between 3 hours and 8 hours more preferably between 4 hours and 6 hours especially 5 hours.

6. Process for making a transition metal oxyfluoride according to one of the claims 1 to 5, wherein the at least one transition metal is chosen from the group consisting of {Sc, Ti, V, Cr, Mn, Fe, Co, Ni, Cu, Zn, Nb and Mo} preferably {Ti, Mn}.

7. Process for making a transition metal oxyfluoride according to one of the claims 1 to 6, wherein during step (a) two transition metal compounds are provided.

8. Process for making a transition metal oxyfluoride according to one of the claims 1 to 7, wherein a subsequent step of sieving and or mixing preferably milling more preferably high energy milling is carried out after step (e).

9. Process for making a transition metal oxyfluoride according to one of the claims 1 to 8, wherein the precursors are pre-dried and/or milled before step (b).

10. Transition metal oxyfluoride obtained by the process according to one of the claims 1 to 9.

11. Electrode comprising a transition metal oxyfluoride as active electrode material according to claim 10, a conductive additive, a binder and a current collector.

12. Alkali metal-ion cell comprising an electrode according to claim 11, an electrolyte, a separator and a counter electrode.

13. Process for making an electrode comprising at least a transition metal oxyfluoride according to claim 10 and comprising following steps:
a) providing the transition metal oxyfluoride as active electrode material and a conductive additive
b) adding a mixture of a binder and a solvent to obtain a slurry
c) coating the obtained slurry on a current collector.

14. Process for using the alkali metal ion cell according to claim 12 comprising following steps:
a) assembling the cell
b) conditioning the cell between 1 day and 14 days preferably between 1 day and 7 days, more preferably between 2 days and 5 days especially 3 days
c) electrochemical cycling.

15. Process for using a lithium alkali metal ion cell according to claim 14, whereby the cell is cycled in the voltage window between 1 V and 4.8 V, preferably between 1.3 V and 4.5 V especially between 1.5 V and 4.0 V.
